Europäisches Patentamt

European Patent Office

Office européen des brevets

(11) Publication number: **0 252 680**
**A2**

## (12) EUROPEAN PATENT APPLICATION

(21) Application number: **87305832.5**

(22) Date of filing: **01.07.87**

(51) Int. Cl.⁴: **H04M 1/66 , H04M 1/274**

(30) Priority: **02.07.86 JP 154165/86**
**02.07.86 JP 154166/86**

(43) Date of publication of application:
**13.01.88 Bulletin 88/02**

(84) Designated Contracting States:
**DE FR GB IT**

(71) Applicant: **Tozai Bussan Co. Ltd.,**
**1-11-4, Azabudai**
**Minato-ku Tokyo(JP)**

Applicant: **Kikuchi, Mitsuo**
**3-22-215, Gyotoku-ekimae 4-chome**
**Ichikawa-shi Chiba-ken(JP)**

(72) Inventor: **Kikuchi, Mitsuo**
**3-22-215, Gyotoku-ekimae 4-chome**
**Ichikawa-shi Chiba-ken(JP)**

(74) Representative: **Hartley, David et al**
**c/o Withers & Rogers 4 Dyer's Buildings**
**Holborn**
**London, EC1N 2JT(GB)**

(54) Automatic dialing apparatus for establishing connections between authorised subscribers.

(57) An automatic dialing apparatus comprises a numeral entry device for inputting numerals and a memory for storing telephone directory numbers of authorized subscribers and their abbreviated dialing numbers in locations addressable as a function of the input numerals. For originating a call, the input numerals are used as an address pointer of the memory. An addressed telephone number is sent to a telephone switching system to allow a switched connection to be established to a called party and an addressed abbreviated dialing number is subsequently sent through the connection to the called party. On termination of the call to the called party, a coincidence is detected between the received abbreviated dialing number and an abbreviated dialing number assigned to the called party to verify authorization on detection of the coincidence. The latter is sent to the calling party to permit it to detect a coincidence between it and a copy of the number sent to the called party to verify authorization on detection of the last-mentioned coincidence.

**"Automatic Dialing Apparatus for Establishing Connections Between Authorized Subscribers"**

## BACKGROUND OF THE INVENTION

The present invention relates to an automatic dialing apparatus of the type suitable for communications of confidential nature.

Automatic dialing techniques are in extensive use for rapid and accurate establishment of a call from any communication source over a public telephone network. However, the introduction of error to dialing information still causes an undesired connection to be established. This will result in the transmission of a message of confidential nature to an undesired party.

## SUMMARY OF THE INVENTION

It is therefore an object of the present invention to provide an automatic dialing apparatus which permits connections to be established through a telephone switching network between authorized subscribers.

The automatic dialing apparatus of the invention comprises a numeral entry device and a memory which is preferably detachable from the apparatus. The memory stores telephone directory numbers of authorized subscribers and abbreviated dialing numbers in such locations addressable as a function of numerals entered through the numeral entry device. The telephone directory numbers and the abbreviated dialing numbers have a one-to-one correspondence to each other. For originating a call, a controller at a calling party addresses the memory using numerals entered through the entry device as an address pointer and causes a tone burst transmitter to send the addressed telephone directory number to a telephone switching system to allow a switched connection to be established to a called party having the automatic dialing apparatus and causes the transmitter to send the addressed abbreviated dialing number through the connection to the called party. On termination of the call to the called party, the controller at the called party causes a tone burst receiver to receive the abbreviated dialing number from the calling party and detects a coincidence between the received number and an abbreviated dialing number assigned to the called party and verifies authorization on detection of the coincidence. A copy of the assigned abbreviated dialing number is sent to the calling party to permit it to verify authorization on detection of a coincidence between a copy of the abbreviated dialing number sent to the called party and the received copy. In response to the verification at each of the calling and called parties, a communication device is switched to each end of the connection to initiate data transfer.

By virtue of the exchanging of the abbreviated dialing number of the called party between source and destination through the switched telephone network for verification, the dialing apparatus of the present invention eliminates the establishment of unauthorized connections to the authorized subscribers and prevents undesired transmission of confidential messages to unauthorized subscribers.

In addition, the detachable coupling of the memory allows a large number of authorized subscribers to be registered or updated at a central location.

## BRIEF DESCRIPTION OF THE DRAWINGS

The present invention will be described in further detail with reference to the accompanying drawings, in which:

Fig. 1 is a block diagram of an automatic dialing apparatus of the present invention with an associated facsimile machine connected through a telephone switching system to a called party having the same automatic dialing apparatus and a facsimile machine as those of the calling party;

Fig. 2 is a plan view of the automatic dialing apparatus; and

Fig. 3 is a flowchart describing programmed instructions performed by the microprocessor of Fig. 1;

## DETAILED DESCRIPTION

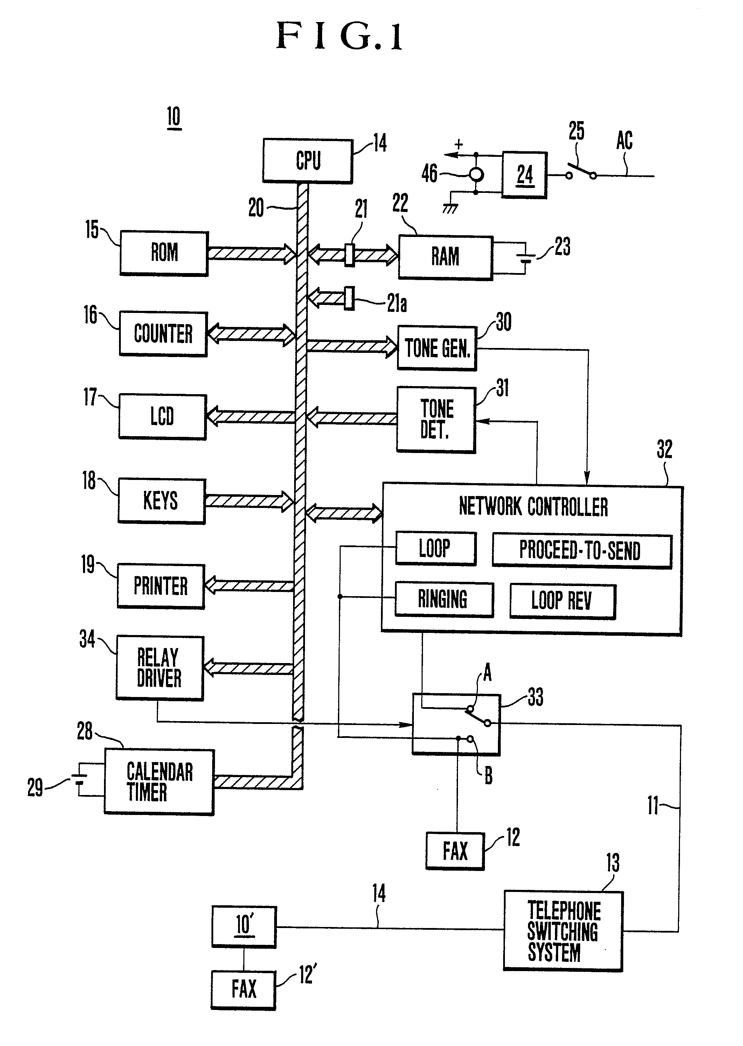

In Fig. 1, an automatic dialing apparatus 10 according to the present invention comprises a random access memory 22 which is implemented by CMOS (complementary metal-oxide-semiconductor) transistors and stores the telephone directory numbers of authorized subscribers and the abbreviated dialing numbers of the telephone directory numbers. A maximum of 6000 sets of such directory and abbreviated dialing numbers are stored in the memory 22. Memory 22 is detachably connected to a bus 20 by means of a connector 21 and has a built-in nickel cadmium battery 23 for backup to prevent it from losing its memory contents when removed from the apparatus or during power outages. A special memory writing device (not shown) is used to store the necessary information into memory 22. As will be described, the memory writing and rewriting operations can also be made by a registration function provided in the dialing apparatus 10. An additional random access memory can be connected to the bus 20 by a connector 21a to increase the memory capacity. A memory copying machine located at a convenient place is advantageously used for copying the storage contents of memory 22 to the additional random access memory at a high speed to update the stored contents of many of such memories 22.

In a specified address location of the memory 22 is stored an abbreviated dialing number assigned uniquely to the user of the apparatus 10. The writing of this assigned dialing number is effected by a self-registration feature to be described later.

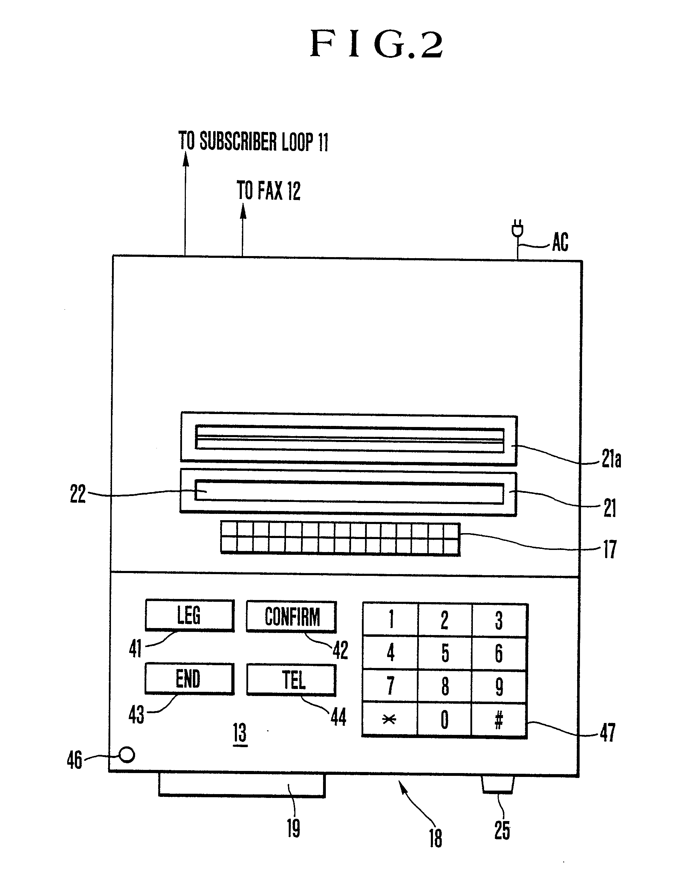

Illustrated at 18 is a keyboard for entering an address signal which may be in the form of digits corresponding to the stored directory numbers or abbreviated dialing numbers. As shown in Fig. 2, the keyboard 18 comprises a ten-key arrangement 47 and a plurality of function keys 13. Function keys 13 include a registration key 41 for storing an abbreviated dialing number into the memory 22, a confirmation key 42 for confirming the stored contents and for instructing a forced communication mode, an end-of-entry key 43 and a TEL key 44 which is used to setup a call using an abbreviated dialing number.

Illustrated at 14 is a microprocessor which performs computations on the input data supplied from the keyboard 18 in accordance with programmed instructions stored in a read-only memory 15 and controls the various units connected to the bus 20. The functions performed by the microprocessor 14 include:

1) On receipt of an abbreviated dialing number (ADN) supplied from the ten-key arrangement 47, microprocessor 14 of a calling party makes a search for a match with the same abbreviated dialing number in the RAM 22 and proceeds to read a telephone directory number associated with it.

2) On receipt of an abbreviated dialing number returned from a called party, microprocessor 14 of the calling party compares it with the abbreviated dialing number entered by the ten-key arrangement 47 and detects whether they coincide with each other.

3) In response to the detection of a coincidence in the item 2, microprocessor 14 of the calling party supplies a signal to a relay driver 34 to switch a relay 33 from position A to position B.

4) On receipt of an abbreviated dialing number from the calling party, microprocessor 14 of the called party detects whether it coincides with the abbreviated dialing number uniquely assigned to the called party.

5) In response to the detection of a coincidence in item 4, microprocessor 14 of the called party reads the assigned abbreviated dialing number from the RAM 22 and causes a tone generator 30 to generate a train of tone bursts and sends it to the calling party.

6) After the transmission of the tone bursts, microprocessor 14 of the called party controls the relay driver 34 to switch the relay 33 from position B to position A.

Tone generator 30 converts the information retrieved from the memory 22 by microprocessor 14 to a train of multi-frequency tone bursts and sends it through a network controller 32 to a subscriber loop 11.

Network controller 32 provides "dc" loop check for the origination of a call, transmits a proceed-to-send signal to a calling party upon termination of an incoming call, supplies a ringing signal to a facsimile 13 and provide loop reversals. Network controller 32 applies the output of tone generator 30 to the subscriber loop 11 when the relay 33 is in position A and applies an incoming tone burst signal that is sent from a calling party through the telephone switching system 13 to a multi-frequency tone detector 31.

Tone detector 31 converts the received tone bursts into a train of pulses and applies it to the microprocessor 14. Relay driver 34 is responsive to a set signal from the microprocessor 14 to operate relay 33 to switch the subscriber loop 11 to the facsimile 13 and to the "dc" loop detector and ringing generator of the network controller 32 and is responsive to a reset signal from the microprocessor 14 to release the relay 33 to reconnect the subscriber loop 11 to the automatic dialing apparatus 10.

A counter 16 is connected to the bus 20 to provide count operation. A liquid crystal display 17 is also connected to the bus 20 to provide a display of numerals on two rows of 16 digits. A printer 19 is connected to the microprocessor 14 to provide a printout of various items of dialing information. A calendar timer 28 with a backup battery 29 is connected to the bus 20.

Illustrated at 24 is a power unit which rectifies AC voltage and supplies DC voltages to various parts of the dialing apparatus. A pilot lamp 46 shines when power switch 25 is turned on.

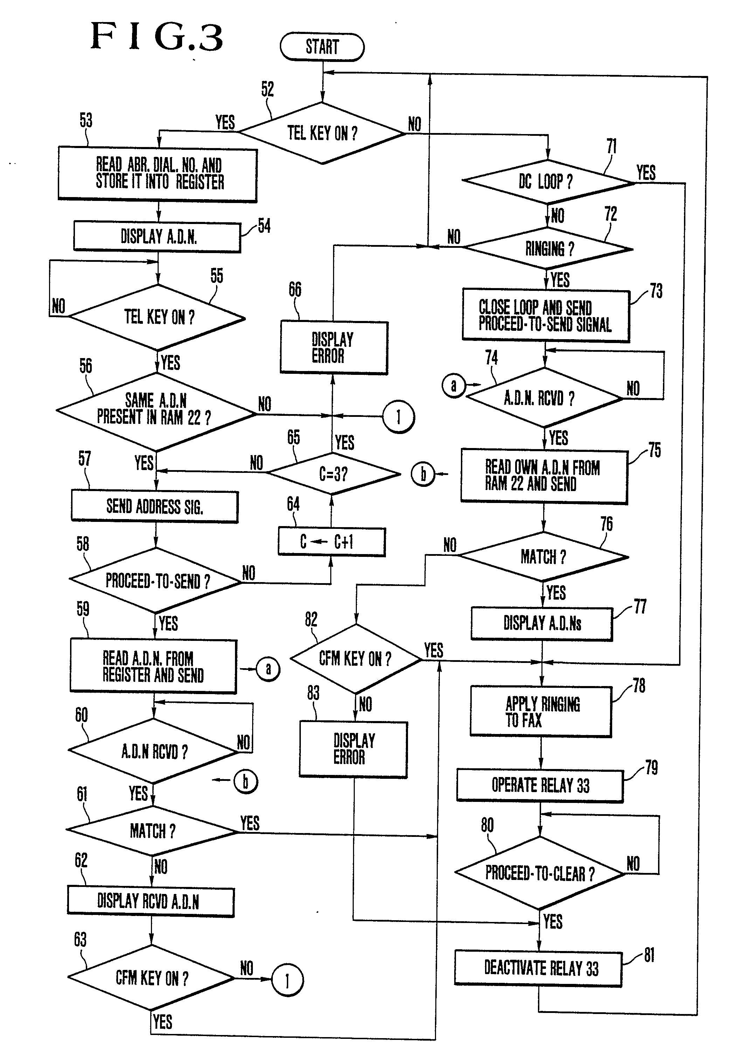

Fig. 3 is a flowchart describing the instructions programmed into the read-only memory 15. It is assumed that a call is originated from the dialing apparatus 10 to the dialing apparatus 10'. When the apparatus 10 is rendered active in response to the turn-on of power switch 25, the program starts with decision block 52 which checks to see if the TEL key 44 is operated. If the answer is negative, exit is to decision block 71 which allows the network controller 32 to detect the presence of a "dc" loop which indicates that the facsimile 12 is making an attempt to originate a call. If the answer is affirmative in block 71, control goes to operations block 64 which directs the operation of relay 33 to switch the facsimile 13 to the subscriber loop 11. If the answer in block 71 is negative, exit is to decision block 72 which directs the network controller 32 to check for the presence of a ringing signal indicating the termination of an incoming call. If the answer is negative, control returns to decision block 52 to repeat the above process until the TEL key 44 is operated.

With the program performing the above process and with a document being set on the facsimile 13 ready for transmission, the operation of TEL key 44 causes the microprocessor 14 to advance to operations block 53 which directs the reading of the abbreviated dialing number of a called party from the ten-key arrangement 47 into a register of the microprocessor 14. Exit from operations block 53 is to operations block 54 which directs the displaying of the data on the liquid crystal display 17. Control proceeds to decision block 55 which checks for a second operation of TEL key 44 giving an indication that an data entry operation is complete. If the answer is affirmative, exit is to decision block 56 which provides a search in the RAM 22 to see if there is an abbreviated dialing number identical to that stored in the register. If there is none, exit is to operations block 65 which directs the displaying of error indication on the liquid crystal display 17 and control returns to decision block 52. If there is one, control proceeds to operations block 57 which directs the reading of a telephone directory number associated with the registered abbreviated dialing number from the RAM 22 and directs the application of this telephone number to the tone generator 30. Tone generator 30 supplies a corresponding address tone signal through the network controller 32 and the subscriber loop 11 to the switching system 13 to allow it to establish a ringing connection to the called dialing apparatus 10'. Exit then is to decision block 58 which directs the network controller 32 to test for the presence of a proceed-to-send signal from the called party 10'. If the called party is busy, there is no proceed-to-send signal and exit from decision block 58 is to operations block 64 which directs the counter 16 to increment a count C by one if a prescribed timeout period has expired. This count value is checked with a prescribed value, typically "3" (block 65). If the answer is negative in this block, exit is to operations block 57 to repeat the transmission of the address tone signal to the telephone switching system 13. If the answer in block 65 becomes negative due to a prolonged busy condition of the called party 10',

control advances to block 66 to indicate that a call origination attempt has failed. If the called party becomes available before the count C reaches the prescribed value, the answer in decision block 58 becomes affirmative and control proceeds to operations block 59 which directs the reading of the registered abbreviated dialing number and the application of this number to the tone generator 30. Therefore, a tone signal representing the called party's abbreviated dialing number is sent from the calling party 10 through the switching system 13 to the called party. Following the transmission of the tone signal from the calling party 10, a copy of this abbreviated dialing number is stored into a second register of the microprocessor of the calling party.

Meanwhile, the microprocessor 14 at the called party 10' is in the process of executing blocks 52, 71 and 72 when it receives a ringing signal from the switching system 13 following the transmission of the address tone signal from the calling party described in connection with operations block 57, thus causing control in the dialing apparatus 10' to advance to operations block 73. Block 73 directs the closing of a subscriber loop 14 between the apparatus 10' and switching system 13 and the sending of a proceed-to-send signal to the calling party 10 to allow its program execution to proceed to block 59. At the called party 10', exit then is to decision block 74 which checks for the presence of a tone signal transmitted from the calling party 10 when it is executing its block 59. If the answer in block 74 is affirmative, control proceeds to operations block 75 which directs the reading of the called party's abbreviated dialing number from its RAM 22 and directs the application of this number to the tone generator 30, causing a tone signal to be sent from the called party. Exit then is to decision block 76 which tests for the presence of a match between the abbreviated dialing number received in block 74 and the one that was read from RAM 22 in block 75. If there is a match, exit is to operations block 77 which directs the display of the received abbreviated dialing number and the own abbreviated dialing number for visual comparison. A ringing signal is supplied to the facsimile 12' from the network controller (block 78) for conditioning it to accept the incoming call. Control proceeds to block 79 which directs the operation of the switching relay 33 to connect the subscriber loop 11' to the facsimile 12'.

At the calling party 10, on the other hand, control proceeds to decision block 60 to check for the presence of the tone signal that is sent from the called party 10' when it is executing its block 75. Exit then is to decision block 61 which checks for the presence of a match between the abbreviated dialing number received in block 60 and the one that is stored in the second register mentioned above. If the answer is affirmative, exit from block 61 is to operations block 78 which directs the application of a ringing signal to the facsimile 12. Thus, switching relay 33 is operated (block 79) to switch the subscriber loop 11 into circuit with the facsimile 12 to establish an end-to-end connection between facsimiles 12 and 12', allowing the calling party to initiate transmission of documents.

At each end of the connection, the microprossor 14 now executes decision block 80 which checks for the presence of a proceed-to-clear signal sent from the calling party 10. When the answer becomes affirmative in decision block 80, control goes to operations block 81 which directs the deactivation of switching relay 33 to reconnect the respective subscriber loop to the dialing apparatus. Control now returns to block 52.

If the answer at block 61 is negative, the microprocessor 14 of the calling party 10 goes to decision block 62 which directs the display of the received abbreviated dialing number from the called party. Control then advances to decision block 63 which tests to see if the confirmation key 42 is operated and stays in this decision block 63 for a prescribed timeout period. If the answer is affirmative at the end of the timeout period, control advances to operations block 78 to apply a ringing signal to the facsimile 12, and if the answer is negative at the end of the timeout period, exit is to operations block 65 to provide a visual indication of error.

Mismatch in decision block 61 can arise as a result of a failure on the called party to transmit its own abbreviated dialing number, or as a result of a corruption of this number during transmission due to noise or a manual writing error involved with the storage of telephone directory numbers and associated abbreviated dialing numbers into RAM 22. The abbreviated dialing numbers displayed on LCD 17 allow the attendant at the calling party to verify the called party if the returned number differs from the one sent to the called party. Confirmation key 42 is provided to permit the attendant to forcibly establish a connection to the called party if it can be regarded as an authorized subscriber.

If mismatch is detected in decision block 76 at the called party 10', control goes to decision block 82 which checks for the operation of confirmation key 42. If the answer is positive, operations block 78 is executed to apply ringing signal to the facsimile 12' to establish a connection, and if the answer is negative, exit is to operations block 83 which directs the displaying of error on LCD 17 and control proceeds to operations block 81 to cause the switching relay 33 to remain deactivated to prevent incoming calls from being accepted. Mismatch in block 76 can occur as a result of the same causes as described in connection with the calling party. Confirmation key 42 at the called party also allows the attendant to forcibly establish a connection to a calling party if it can be regarded as an authorized subscriber.

The automatic dialing apparatus of the present invention have the following additional functions:

1) Self-registration of telephone numbers

This function allows an abbreviated dialing number uniquely assigned to the apparatus to be registered into a predetermined storage location of the memory 22 by the use of ten-key 47.

2) Registration

After the registration key 41 has been operated, an abbreviated dialing number and a telephone directory number can be registered into the memory 22. The end of data entry is indicated by the operation of the end-of-entry key 43.

3) Calendar time setting

After operating an assigned key, calendar data can be made entry by ten-key 47 into the calendar timer 28 with the aid of the microprocessor 14.

4) Resetting retransmission cycles

After operating an assigned key, a desired numeral can be made entry into the RAM 22 by ten-key 47 to reset the number of cycles by which the transmission of an address tone signal can be reattempted.

5) Printer on/off setting

After operating an assigned key on the ten-key 47, a printer on/off flag can be stored into the RAM 22 through the microprocessor.

6) Memory Copy

By coupling an additional RAM 22 to the connector 21a and operating an assigned key, the microprocessor 14 proceeds to sequentially read the contents of the original RAM 22 which is connected through connector 21 and writes them into corresponding address locations of the additional RAM 22 at a high speed.

The verification feature of the present invention is advantageous for applications in which communications of confidential nature are frequently exchanged between many locations of an organization.

Furthermore, the use of the detachable memory 22 allows a large number of such memories 22 to be loaded or updated with new data at a central location using a special memory writing apparatus, because of the elimination of the need for bringing the dialing apparatus to the central location or bringing the memory writing apparatus to each location for purposes of updating the memory contents.

While mention has been made of facisimile communication, the present invention could equally be as well applied to computer communications.

The foregoing description shows only one preferred embodiment of the present invention. Various modifications are apparent to those skilled in the art without departing from the scope of the present invention which is only limited by the appended claims. Therefore, the embodiment shown and described is only illustrative, not restrictive.

## Claims

1. An automatic dialing apparatus adapted to be connected to a telephone switching system, said apparatus having call origination and call termination modes of operation, comprising:
numeral entry means;
memory means for storing telephone directory numbers of authorized subscribers and abbreviated dialing numbers in storage locations addressable as a function of numerals entered through said numeral entry means during said call origination mode, said telephone directory numbers and said abbreviated dialing numbers corresponding respectively to each other;
tone burst transmit means;
tone burst receive means;
means operational in said call origination mode for causing said transmit means to transmit the addressed telephone directory number to said telephone switching system to allow a switched connection to be established to a called party having said automatic dialing apparatus and causing said transmit means to transmit the addressed abbreviated dialing number through said connection to said called party;
means operational in said call termination mode for causing said receive means to receive an abbreviated dialing number from a calling party having said automatic dialing apparatus, detecting a coincidence between said received number and an abbreviated dialing number assigned to the called party, verifying authorization on detection of said coincidence and causing said transmit means to transmit a copy of said assigned abbreviated dialing number to said calling party; and
means operational in said call origination mode for causing said receive means to receive said copy returned from the called party, detecting a coincidence between da copy of said abbreviated dialing number transmitted to said called party and the received copy and verifying authorization on detection of the last-mentioned coincidence.

2. An automatic dialing apparatus as claimed in claim 1, further comprising means for connecting a communication device associated with said called party to a terminating end of said connection in response to the detection of the first-mentioned coincidence and connecting a communication device associated with the calling party to an originating end of said connection in response to the detection of the last-mentioned coincidence.

3. An automatic dialing apparatus as claimed in claim 1, wherein said abbreviated dialing numbers stored in said memory means are addressable as a function of an abbreviated dialing number entered through said numeral entry device.

4. An automatic dialing apparatus as claimed in claim 1, further comprising means operational in said call origination mode for providing display of said abbreviated dialing number entered through said numeral entry means and the abbreviated dialing number received from the called party and a manually operated key for forcibly connecting the communication device associated with said calling party to said originating end of said connection.

5. An automatic dialing apparatus as claimed in claim 1, further comprising means operational in said call termination mode for providing display of said abbreviated dialing number received from said calling party and the abbreviated dialing number assigned to the called party and a manually operated key for forcibly connecting the communication device associated with said called party to said terminating end of said connection.

6. An automatic dialing apparatus as claimed in claim 1, wherein said memory means is detachable from said apparatus for storing and rewriting the contents therein.

7. An automatic dialing apparatus as claimed in claim 6, wherein said memory means comprises a random access memory having a backup battery to permit the memory to retain stored information when detached from said apparatus, further comprising means for storing new telephone directory numbers and associated abbreviated dialing numbers while said random access memory is in said apparatus.

8. A method of establishing a connection through a telephone switching system between calling and called parties, comprising:

storing telephone directory numbers of authorized subscribers and abbreviated dialing numbers in storage locations addressable as a function of numerals, said telephone directory numbers and said abbreviated dialing numbers corresponding respectively to each other;

entering numerals and addressing said stored telephone directory numbers and said abbreviated dialing numbers as a function of the entered numerals;

transmitting the addressed telephone directory number to said telephone switching system to allow a switched connection to be established to said called party;

transmitting the addressed abbreviated dialing number from said calling party through said connection to said called party;

storing a copy of the abbreviated dialing number transmitted to said called party;

receiving said abbreviated dialing number transmitted from the calling party and detecting a coincidence between said received number and an abbreviated dialing number assigned to the called party;

verifying authorization on detection of said coincidence and transmitting a copy of said assigned abbreviated dialing number to said calling party;

receiving said copy returned from the called party and detecting a coincidence between said stored copy and the received copy; and

verifying authorization on detection of the last-mentioned coincidence.

9. A method as claimed in claim 8, further comprising connecting a communication device to one end of said connection on detection of the first-mentioned coincidence, and connecting a communication device to the other end of said connection on detection of the last-mentioned coincidence.

# FIG.1

# F I G.2

TO SUBSCRIBER LOOP 11

TO FAX 12

AC

# F I G. 3

START

52 TEL KEY ON ?

53 READ ABR. DIAL. NO. AND STORE IT INTO REGISTER

54 DISPLAY A.D.N.

55 TEL KEY ON ?

56 SAME A.D.N PRESENT IN RAM 22 ?

57 SEND ADDRESS SIG.

58 PROCEED-TO-SEND ?

59 READ A.D.N. FROM REGISTER AND SEND

60 A.D.N RCVD ?

61 MATCH ?

62 DISPLAY RCVD A.D.N

63 CFM KEY ON ?

66 DISPLAY ERROR

65 C=3?

64 C ← C+1

82 CFM KEY ON ?

83 DISPLAY ERROR

71 DC LOOP ?

72 RINGING ?

73 CLOSE LOOP AND SEND PROCEED-TO-SEND SIGNAL

74 A.D.N. RCVD ?

75 READ OWN A.D.N FROM RAM 22 AND SEND

76 MATCH ?

77 DISPLAY A.D.Ns

78 APPLY RINGING TO FAX

79 OPERATE RELAY 33

80 PROCEED-TO-CLEAR ?

81 DEACTIVATE RELAY 33

YES NO

a b 1